# EUROPÄISCHE PATENTANMELDUNG

(11) **EP 0 570 736 A1**
(43) Veröffentlichungstag der Anmeldung: **24.11.1993**
(21) Anmeldenummer: 93106942.1
(22) Anmeldetag: 29.04.1993
(51) Int. Cl.: B60G 7/00, F16C 11/06, B62D 7/18

(54) **Gelenk für Fahrwerksteile in einem Kraftfahrzeug**

(30) Priorität: 20.05.1992 DE 9206848 U
(71) Anmelder: LEMFOERDER METALLWAREN AG., D-49441 Lemförde (DE)
(72) Erfinder: Grube, Rainer, W-4995 Stemwede (DE)
(74) Vertreter: Bruse, Willy Hans Heinrich

(57) **Zusammenfassung**

Die Erfindung bezieht sich auf ein Gelenk für Fahrwerksteile in einem Kraftfahrzeug, welches aus einem Gehäuse (1) und aus einem darin in einer Gelenkschale (4) gelagerten Innenteil (3) besteht und einen Dichtungsbalg (6) zwischen dem Gehäuse (1) und dem demgegenüber beweglichen Innenteil (3) aufweist, insbesondere auf ein Kugelgelenk mit einer am Ende eines Kugelzapfens (2) ausgebildeten, in der Gelenkschale (4) gelagerten Gelenkkugel, die zusammen mit dem Kugelzapfen (2) das Innenteil bildet. Bei diesem Gelenk ist am Gehäuse (1) ein den Dichtungsbalg (6) und andere empfindliche Bereiche wenigstens in einem Teilbereich des Umfanges abschirmender Schutzschirm (9) befestigt.

## Beschreibung

Die Erfindung betrifft ein Gelenk für Fahrwerksteile in einem Kraftfahrzeug, welches aus einem Gehäuse und einem darin in einer Gelenkschale gelagerten Innenteil besteht und bei dem ein Dichtungsbalg zwischen dem Gehäuse und dem demgegenüber beweglichen Innenteil vorgesehen ist, insbesondere ein Kugelgelenk mit einer am Ende eines Kugelzapfens ausgebildeten, in der Gelenkschale gelagerten Gelenkkugel, die zusammen mit dem Kugelzapfen das Innenteil bildet.

Häufig sind solche Gelenke auf engstem Raum in unmittelbarer Nähe von Fahrwerksteilen eingebaut, die im Betrieb Wärme in einem die Lebensdauer des Gelenks beeinträchtigenden Umfang entwickeln, zum Beispiel in der Nähe von Bremsscheiben. Es ist zwar aus dem Buch Jörnsen Reimpell, "Fahrwerktechnik: Radaufhängungen", Vogel-Buchverlag Würzburg, 2. Auflage 1988, Seite 135, bekannt, solche Fahrwerksteile hinter einem Schutzblech anzuordnen, welches bei Bremsscheiben zum Beispiel an der Radlagerung befestigt ist und die Bremsscheiben vollständig abdeckt, aber solche Schutzbleche müssen aus mehreren Gründen als relativ komplizierte Prägeteile in an sich unerwünschter Größe ausgebildet sein, so daß die sich im Fahrzeugbetrieb bewegenden Massen erhöht werden und Bauraum verlorengeht. Eine Verbesserung wird bei der Anordnung nach der EP 0 185 899 -B1- durch Eingliederung eines solchen Schutzbleches in tragende Teile der Radaufhängung angestrebt, aber auch dies führt zu einer sehr kostenintensiven Lösung mit einem nicht unerheblichen Gewicht.

Der Erfindung liegt die Aufgabe zugrunde, eine Abschirmung empfindlicher Bereiche eines Gelenks der Fahrwerksteile in Kraftfahrzeugen, insbesondere eines Kugelgelenks mit einer Kunststoffgelenkschale und einem Faltenbalg zwischen dem Gehäuse und dem Kugelzapfen aus elastischem Werkstoff mit kostengünstigen Mitteln zu erreichen, wobei diese Mittel möglichst wenig Bauraum beanspruchen und am Gelenk vormontierbar sind.

Diese Aufgabe löst die Erfindung durch eine Ausbildung mit Merkmalen nach dem Kennzeichen des Anspruches 1.

Die unmittelbare Verbindung eines solchen Schutzschirmes mit dem Gehäuse eines Gelenks, insbesondere eines Kugelgelenks, ermöglicht die Vormontage an dem Gelenk, so daß zusätzliche Montagearbeiten beim Einbau des Gelenks entfallen. Der Schutzschirm erstreckt sich auch nur über die tatsächlich durch Wärmeeinwirkung gefährdeten Bereiche des Gelenks. Er ist daher sehr viel kleiner und demzufolge billiger herzustellen als bekannte Abschirmvorrichtungen. Bevorzugt wird eine Ausbildung, bei der der Schutzschirm einen Haltering aufweist, der das Gehäuse um mehr als 180° umschließt, so daß dieser Haltering mit relativ geringem Aufwand sicher am Gehäuse befestigt, zum Beispiel mit diesem verstemmt werden kann. Dazu ist am Gehäuse vorteilhaft ringsumlaufend eine Ausnehmung ausgebildet, die zur Befestigung des Halteringes dient. Zur Vereinfachung der Herstellung wird der Schutzschirm im Längsschnitt in der Achsebene des Kugelzapfens eines Kugelgelenks winkelförmig aus einem Blechstück geformt, was ebenfalls in einem Arbeitsgang erfolgen kann.

Auf der Zeichnung ist ein Ausführungsbeispiel der Erfindung dargestellt. Es zeigen;

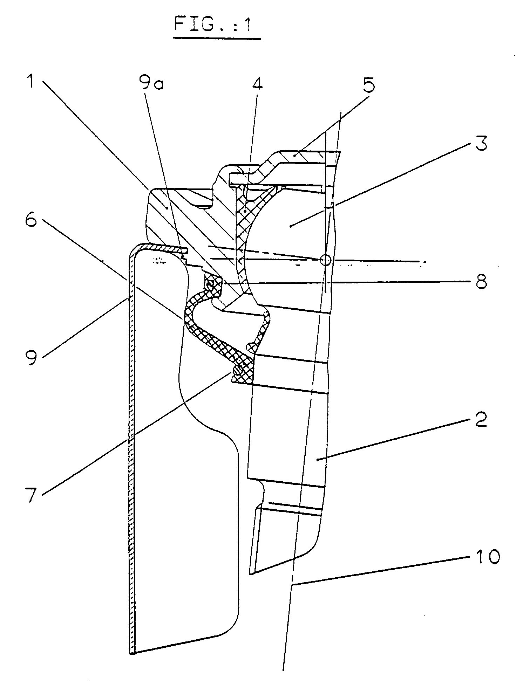

Figur 1 einen teilweisen Längsschnitt durch ein Kugelgelenk in einer Ebene der Mittelachse des Kugelzapfens,
Figur 2 eine Draufsicht auf den Schutzschirm und
Figur 3 eine Seitensicht des Schutzschirms.

Das auf der Zeichnung dargestellte Kugelgelenk besteht aus dem mit einem Fahrwerksteil verbindbaren Gehäuse 1 und dem Kugelzapfen 2, der mit einer an seinem einen Ende ausgebildeten Gelenkkugel 3 mittels einer Lagerschale 4 in dem Gehäuse 1 allseitig beweglich gelagert ist. An dem einen Ende ist das Gehäuse 1 durch einen Deckel 5 verschlossen, der durch Einbördelung seines Randes mit dem Gehäuse 1 fest verbunden ist. Die gegenüberliegende Öffnung des Gehäuses 1, durch die der Kugelzapfen 2 herausgeführt ist, wird durch einen Faltenbalg 6 abgedichtet, der an seinen Enden jeweils einen Randwulst 7 aufweist und mit dem einen Ende mittels eines Spannringes 8 auf dem Kugelzapfen 2 gehalten und mit dem anderen Ende mittels eines oder mehrerer Spannringe 8 an dem Gehäuse 1 befestigt ist. Zum Schutze der empfindlichen Teile des Gelenkes gegen Wärmeeinstrahlung ist ein Schutzschirm 9 aus Blech oder einem anderen geeigneten Werkstoff vorgesehen.

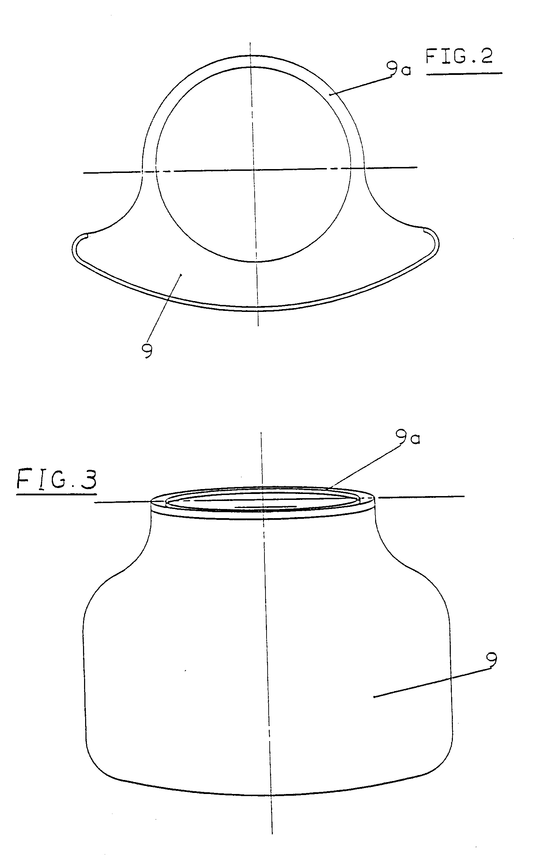

Dieser Schutzschirm 9 ist im Querschnitt durch die Längsachse 10 des Kugelzapfens 2 gewölbt ausgebildet, wodurch nicht nur die Schirmwirkung verbessert, sondern auch eine Erhöhung der Steifigkeit erreicht wird. Die im Beispiel dargestellte, bevorzugte Ausbildung des Schutzschirmes 9 ist im Längsschnitt in einer Ebene der Achse 10 winkelförmig aus einem Blechstück geformt, so daß an einem Ende des gewölbten Schirmteiles ein abgewinkelter Kragen 9a für die Befestigung des Schutzschirmes 9 an dem Gehäuse 1 entsteht. Dieser Kragen 9a umschließt das Gehäuse mit mehr als 180°, ist vorteilhaft jedoch als in sich geschlossener Ring ausgebildet. Mit diesem Ring 9a ist der Schutzschirm 9 in einer umlaufend am Gehäuse ausgebildeten Ausnehmung beispielsweise durch Verstemmen befestigt. Zur Veranschaulichung der bevorzugten Geometrie eines solchen Schutzschirmes 9 dienen die Darstellungen in den Figuren 2 und 3.

## Patentansprüche

1. Gelenk für Fahrwerksteile in einem Kraftfahrzeug, welches aus einem Gehäuse und aus einem darin in einer Gelenkschale gelagerten Innenteil besteht und einen Dichtungsbalg zwischen dem Gehäuse und dem demgegenüber beweglichen Innenteil aufweist, insbesondere Kugelgelenk mit einer am Ende eines Kugelzapfens ausgebildeten, in der Gelenkschale gelagerten Gelenkkugel, die zusammen mit dem Kugelzapfen das Innenteil bildet, dadurch gekennzeichnet, daß an seinem Gehäuse (1) ein den Dichtungsbalg (6) und andere empfindliche Bereiche wenigstens in einem Teilbereich des Umfanges abschirmender Schutzschirm (9) befestigt ist.

2. Gelenk nach Anspruch 1, dadurch gekennzeichnet, daß der Schutzschirm (9) einen Haltering (9a) aufweist, der das Gehäuse (1) mit mehr als 180° umschließt.

3. Gelenk nach den Ansprüchen 1 und 2, dadurch gekennzeichnet, daß der Haltering (9a) in einer am Gehäuse umlaufend ausgebildeten Ausnehmung befestigt ist.

4. Gelenk nach den Ansprüchen 1 bis 3, dadurch gekennzeichnet, daß der Schutzschirm (9) im Längsschnitt in einer Achsebene des Kugelzapfens (2) winkelförmig aus einem Blechstück geformt ist.
